# FASCICULE DE BREVET EUROPEEN

(11) **EP 2 947 393 B1**
(45) Date de publication et mention de la délivrance du brevet: **07.03.2018**
(21) Numéro de dépôt: 15167486.8
(22) Date de dépôt: 17.07.2012
(51) Int. Cl.: F24D 11/00, F24D 19/10, F24J 2/46

(54) **CIRCUIT DE PROTECTION CONTRE LES EFFETS DE LA SURCHAUFFE DANS UN SYSTÈME DE PRODUCTION D'EAU CHAUDE, ET SYSTÈME DE PRODUCTION D'EAU CHAUDE CORRESPONDANT**
SCHUTZUMLAUF GEGEN ÜBERHITZUNGSEFFEKTE IN EINEM HEISSWASSERBEREITUNGSSYSTEM, UND ENTSPRECHENDES HEISSWASSERBEREITUNGSSYSTEM
CIRCUIT FOR PROTECTION AGAINST THE EFFECTS OF OVERHEATING IN A HOT-WATER PRODUCTION SYSTEM, AND CORRESPONDING HOT-WATER PRODUCTION SYSTEM

(30) Priorité: 19.07.2011 FR 1156529
(43) Date de publication de la demande: 25.11.2015
(62) Demande divisionnaire de: 12741279.9
(73) Titulaire: Thomere Finance, 44160 Sainte-Anne-sur-Brivet (FR)
(72) Inventeur: Thomere, Yannick, 44160 Sainte-Anne-Sur-Brivet (FR); Thomere, Frédéric, 44170 Nozay (FR)
(74) Mandataire: Vidon Brevets & Stratégie

(56) Documents cités:
- EP-A1- 0 003 924
- DE-A1- 2 753 756
- DE-A1- 2 839 258
- DE-A1- 19 906 087
- US-A- 4 027 821

## Description

Le domaine de l'invention est celui de la conception, de la fabrication et de l'installation des équipements pour la production d'eau chaude, notamment sanitaire. Plus précisément, l'invention concerne un système de production d'eau chaude utilisant un ou plusieurs capteurs solaires thermiques à eau destinés à alimenter en eau chaude un ballon de stockage d'eau chaude, lui-même susceptible d'alimenter un réseau.

L'invention s'applique tant aux installations situées dans des bâtiments ou des sites résidentiels, qu'à des sites tertiaires, industriels ou agricoles.

Dans les systèmes de production d'eau chaude sanitaire mettant en oeuvre des capteurs solaires thermiques, il est classique de concevoir l'installation avec un circuit appelé « primaire » et un circuit appelé « secondaire ». Une telle configuration d'installation permet de séparer du liquide circulant dans le circuit primaire (et circulant par conséquent dans les capteurs solaires) de l'eau chaude sanitaire utilisée dans le réseau alimenté par le ballon d'eau chaude (ou tout autre réservoir de stockage).

Une telle installation contient alors un échangeur de chaleur qui isole les deux fluides et permet le transfert de calories du liquide circulant dans le circuit primaire vers celui circulant dans le secondaire, à savoir l'eau chaude sanitaire.

Cet échangeur de chaleur, classiquement sous forme de serpentin se trouve généralement à l'intérieur d'un ballon de stockage d'eau chaude sanitaire, le serpentin étant traditionnellement placé au fond du ballon. L'échangeur restitue la chaleur à l'eau froide du circuit secondaire, en partie basse du ballon, l'eau au contact de l'échangeur se réchauffant et se dispersant dans tout le ballon.

L'échangeur, du côté du circuit primaire, utilise un fluide caloporteur. Ce fluide est généralement composé d'un mélange de monopropylène glycol dilué dans de l'eau, permettant de se prémunir de la formation de glace dans le circuit, en cas de conditions climatiques tendant à la formation de gel. Outre le ou les capteurs solaires (placés le plus souvent en toiture de bâtiment), le circuit primaire contient un circulateur ou une pompe, des vannes et différents accessoires, ainsi qu'un vase d'expansion qui préserve des rejets de fluide caloporteur en cas de surchauffe, ainsi qu'une soupape de sécurité qui assure l'intégrité du système.

Pour compléter le système, différents composants peuvent être ajoutés, tel qu'un échangeur complémentaire intégré au ballon, une régulation, ou un dispositif de chauffage d'appoint.

La technique de production d'eau chaude sanitaire par l'intermédiaire des capteurs solaires thermiques est de plus en plus répandue. DE 19906087 A1 décrit un système selon l'art antérieur. Toutefois, les solutions existantes s'inscrivant dans cette approche présentent un certain nombre d'inconvénients.

En premier lieu, un inconvénient majeur réside dans le fait de devoir recourir à un fluide caloporteur additionné d'un produit anti-gel dans le circuit primaire. En effet, de par ses propriétés physico-chimiques, le fluide caloporteur additionné du produit anti-gel présente, comparativement à l'eau claire, les inconvénients suivants :
- il diminue les capacités calorifiques de l'installation, et donc le rendement de l'installation ;
- il circule plus difficilement dans les canalisations (viscosité plus importante) et donc génère une consommation électrique plus importante du circulateur ;
- il tend à polluer l'eau chaude pouvant être consommée, ceci en particulier en cas de perforation de l'échangeur ;
- il tend à polluer l'environnement par des rejets liés à la surpression dans la boucle primaire, qui subit une surchauffe estivale inévitable ;
- il subit un vieillissement précoce, lié principalement aux surchauffes qui provoquent une perte de ses propriétés initiales, nécessitant éventuellement des opérations de maintenance pour renouveler le fluide du circuit primaire.

Un deuxième inconvénient réside dans l'utilisation d'un échangeur entre le circuit primaire et le circuit secondaire. En effet, cet échangeur doit correctement être dimensionné en fonction de :
- la puissance calorifique attendue ;
- la pression manométrique disponible ;
- le débit hydraulique ;
- le volume de stockage ;
- la température d'eau chaude souhaitée.

Un troisième inconvénient est lié au chauffage de l'eau par le phénomène physique de stratification de l'eau chaude dans le ballon de stockage. En effet, en règle générale, les ballons des installations à capteurs solaires sont équipés d'un ou de plusieurs échangeurs placés à l'intérieur du ballon. Ce ou ces échangeurs sont positionnés en partie basse afin d'avoir un échange optimisé et un rendement maximum. Selon ce phénomène physique, la température de l'eau chaude au niveau de l'échangeur se propage par convection dans le ballon. La température d'eau du ballon s'élève tout en restant très homogène dans l'enceinte. Un tel phénomène est relativement lent, et il faut par conséquent des heures de chauffage avant d'obtenir une température d'eau suffisante pour les usages courants (environ 60°C).

Un quatrième inconvénient est lié au fait que, lorsqu'on installe un système de production d'eau chaude sanitaire à l'aide des capteurs solaires, il faut remplacer le ballon de stockage de l'installation existante par un ballon de stockage solaire, voire ajouter un ballon de stockage solaire. Bien entendu, le fait de rajouter ou de remplacer un ballon existant conduit à une dépense importante (liée au coût du ballon et à son installation), ce qui diminue la rentabilité de l'opération. En outre, ceci conduit à mettre des équipements au rebut, impliquant un volume de déchets important.

Dernièrement, des installations ont tenté d'optimiser le principe de production d'eau chaude sanitaire à l'aide de capteurs solaires, ceci en appliquant un chargement en stratification du ballon de stockage, ceci pour permettre d'utiliser l'énergie solaire produite beaucoup plus rapidement que les systèmes solaires classiques.

Dans ce type récent d'installation, l'échangeur est situé à l'extérieur du ballon de stockage. L'eau chauffée est introduite dans la partie supérieure du ballon de stockage. Il s'établit donc une stratification de l'eau dans le haut du ballon de stockage, niveau auquel l'eau chaude est immédiatement disponible.

Toutefois, ces techniques nécessitent le recours à un ballon de stockage spécifique, donc coûteux.

On connaît en particulier le système décrit par le document de brevet publié sous le numéro WO-2008 043573, selon lequel le système comprend un échangeur assurant un transfert de chaleur par convection entre les capteurs solaires et le réservoir de stockage d'eau chaude, l'échangeur prenant la forme d'un réservoir à double enveloppe placé dans un bouteillon vertical. Dans cette double enveloppe circule le fluide primaire issu des capteurs solaires. Autour de cette double enveloppe circule l'eau sanitaire. Le transfert de la chaleur se réalise par convection à l'eau contenue dans le bouteillon. Le chargement en stratification de l'eau chaude vers le réservoir principal de stockage se réalise par thermosiphon au travers d'une tuyauterie raccordée au point haut du réservoir.

Selon cette technique, l'amorçage du thermosiphon nécessite de raccorder la sortie d'eau chaude de l'échangeur à une hauteur minimale (de 500 mm) au-dessus du ballon, ce qui est préjudiciable en termes d'encombrement. Cette technique ne peut pas être mise en oeuvre sur tous les types de ballons d'eau chaude sanitaire proposés sur le marché. En particulier, sur les ballons traditionnels électriques ayant des tubes plongeurs (eau chaude et eau froide) pénétrant le fond inférieur du réservoir.

De plus, le transfert de chaleur entre le fluide primaire et le fluide secondaire s'opère par conduction et convection. Dans la pratique, l'efficacité d'un tel échangeur est relativement limitée. La température de l'eau chaude secondaire en sortie de l'échangeur est donc sensiblement inférieure à la température d'entrée du fluide primaire issue des capteurs solaires. Or, une stratification optimisée nécessite une température d'eau chaude la plus élevée possible, idéalement celle des capteurs solaires.

En outre, une telle technique conserve le recours à un circuit primaire et un circuit secondaire, le fluide circulant dans le circuit primaire comprenant un produit anti-gel qui entraîne les inconvénients déjà cités précédemment.

Un autre problème a été identifié, qui peut surgir notamment si le nombre de capteurs solaires devient important, et qui est lié à la surchauffe. En effet, lorsque le nombre de capteurs solaires augmente, la quantité d'eau augmente, et, en cas de surchauffe, la quantité de vapeur augmente proportionnellement. L'installation doit pouvoir gérer cette quantité de vapeur en cas de surchauffe.

L'invention a notamment pour objectif de pallier ces inconvénients de l'art antérieur.

Plus précisément, l'invention a pour objectif de proposer une installation de chauffage d'eau sanitaire à l'aide de capteurs solaires thermiques à eau, qui soit plus rapide à produire de l'eau chaude sanitaire comparée aux solutions de l'art antérieur.

En ce sens, l'invention a pour objectif de fournir une telle installation qui augmente l'efficacité du transfert de chaleur et qui produit donc de l'eau sanitaire à plus haute température, améliorant la stratification dans le ballon de stockage.

L'invention a également pour objectif de fournir une telle installation qui s'affranchit du recours à un fluide caloporteur comprenant un additif anti-gel.

L'invention a aussi pour objectif de fournir une telle installation qui ne nécessite pas de ballon de stockage spécifique et qui peut, en d'autres termes, être installé en utilisant un ballon d'eau chaude existant.

Un autre objectif de l'invention est d'assurer une protection contre les effets de la surchauffe estivale. Un objectif de l'invention est en particulier de gérer une grande quantité de vapeur en cas de surchauffe.

Ces objectifs, ainsi que d'autres qui apparaîtront par la suite, sont atteints grâce à l'invention qui a pour objet un système de production d'eau chaude, comprenant :
- au moins un capteur solaire thermique à eau ;
- au moins un ballon d'eau chaude ;
- des moyens intermédiaires reliés d'une part audit ou auxdits capteurs solaires et, d'autre part, audit ballon d'eau chaude de façon à alimenter ledit ballon en eau chaude,
caractérisé en ce que les moyens intermédiaires comprennent :
- des moyens de mise en circulation directe de l'eau des capteurs solaires dans le ballon d'eau chaude, et
- un circuit de protection contre les effets de la surchauffe.

Les moyens compris dans un système de production d'eau chaude sanitaire selon l'invention présentent l'avantage de mettre en oeuvre une solution qui ne repose pas sur la coopération classique « circuit primaire/circuit secondaire ». Il en résulte que la partie de l'installation incluant les capteurs solaires thermiques est raccordée en parallèle sur la partie de l'installation incluant le ballon d'eau chaude raccordé au réseau de distribution d'eau chaude sanitaire. Il n'y a donc pas de séparation entre l'eau chaude sanitaire et l'eau des capteurs solaires. Clairement, l'eau chaude sanitaire distribuée dans le réseau circule dans toute l'installation selon l'invention, y inclus au niveau des capteurs solaires thermiques.

Par conséquent, l'ensemble de l'installation utilise la même eau dans des circuits interconnectés. Le système fonctionne à la pression du réseau d'eau potable, dès lors qu'elle est à une pression inférieure à la pression de tarage d'une soupape de sécurité installée dans le circuit.

Comme cela va apparaître plus clairement par la suite, les moyens intermédiaires assurent un transfert de chaleur entre la source chaude (capteurs solaires) et la source froide (ballon de stockage d'eau chaude sanitaire) plus performant (notamment plus rapide, que celui des échangeurs de chaleur traditionnels) et contrôlé, grâce au circuit de protection contre les effets de surchauffe, susceptibles d'intervenir l'été en particulier.

De plus, un système selon l'invention peut être associé à un ballon d'eau chaude traditionnel existant sur une installation à rénover.

Selon une solution avantageuse, les moyens de mise en circulation directe comprennent une chambre de stratification comprenant un conduit amont alimenté par l'un des capteurs solaires.

Ainsi, l'eau provenant des capteurs et destinée à alimenter le ballon d'eau chaude peut être provisoirement stockée, en attendant d'être à la température souhaitée, dans la chambre de stratification.

De façon préférentielle, le circuit de protection est alimenté par piquage à partir du conduit amont.

Cette dérivation du circuit d'eau, à partir du conduit amont, permet d'éviter la circulation d'eau trop chaude vers la chambre de stratification.

Avantageusement, la chambre de stratification délimite un volume mettant en communication au moins quatre conduits :
- un premier conduit, de départ d'eau vers le ballon d'eau chaude, débouchant en partie supérieure de ladite chambre ;
- un deuxième conduit, d'arrivée d'eau, débouchant en partie inférieure de ladite chambre ;
- un troisième conduit, d'arrivée d'eau en provenance du ou des capteurs, constitué par ledit conduit amont, débouchant dans une zone intermédiaire d'arrivée située entre la partie supérieure et la partie inférieure ;
- un quatrième conduit, de départ d'eau vers le ou les capteurs solaires, débouchant entre la partie inférieure et la zone intermédiaire d'arrivée.

Ainsi, le premier conduit peut alimenter le ballon en eau chaude, en étant relié au niveau d'une extrémité supérieure du ballon, et en s'étendant au-dessus de celle-ci.

Le ballon peut alors délivrer l'eau chaude dans un réseau, par un conduit s'étendant à partir de cette extrémité supérieure.

Le ballon d'eau chaude présente une extrémité inférieure communiquant avec le deuxième conduit, pour que l'eau la moins chaude du ballon soit remise en circulation dans le circuit.

Le deuxième conduit permet également d'injecter de l'eau froide, provenant d'un réseau extérieur, dans le circuit.

Ces caractéristiques procurent à l'installation une configuration selon laquelle :
- la sortie de l'eau chauffée se fait en partie haute de la chambre de stratification, au niveau "haute température" (l'alimentation en eau de l'installation se faisant en partie basse de la chambre, au niveau "basse température") ;
- lorsque le circuit solaire est en fonctionnement, l'eau chauffée dans la chambre s'élève dans la partie supérieure et sort de la chambre (un volume d'eau froide équivalent étant alors aspiré dans la partie inférieure de la chambre) ;
- la mise en mouvement de l'eau entre la chambre de stratification et le ballon est générée par un thermosiphon ; en effet, la variation de la masse volumique de l'eau en fonction de la température de la chambre créée une circulation naturelle de l'eau vers le ballon.

Il en résulte que le fluide chauffé sort naturellement de la chambre de stratification et est amené, via le premier conduit, dans la partie supérieure du ballon de stockage d'eau chaude sanitaire. La stratification s'établit de façon immédiate dans le ballon d'eau chaude, à partir du haut de celui-ci.

Pour alimenter le réseau en eau chaude, il est alors avantageux que le conduit correspondant s'étende à partir de l'extrémité haute du ballon d'eau chaude, c'est-à-dire à partir d'une zone du ballon dans laquelle l'eau chaude est immédiatement disponible.

On note que la performance du système selon l'invention peut encore être améliorée, ceci en autorisant la circulation d'eau du thermosiphon par une vanne thermostatique placée sur le premier conduit. La température de stratification dans le ballon est ainsi contrôlée.

On améliore encore le système en réglant le débit d'eau d'un circulateur, de telle sorte que le débit d'eau véhiculé soit faible, ce qui conduit à augmenter la température en sortie de capteurs solaires. Le diamètre de tuyauterie peut alors être sensiblement réduit.

Il en résulte que, la quantité d'eau dans le circuit solaire étant réduite, l'inertie du système est faible. La température de l'eau dans les capteurs solaires s'élève d'autant plus rapidement. Au moindre apport solaire, le thermosiphon s'amorce et permet de produire de l'eau chaude sanitaire immédiatement disponible.

Selon une solution avantageuse, le circuit de protection relie le troisième conduit et le quatrième conduit.

De cette façon, les effets de la surchauffe qui se manifestent dans le troisième conduit peuvent être absorbés et la pression contrôlée.

Préférentiellement, le circuit de protection comprend une chambre de stockage et de refroidissement d'eau provenant des capteurs solaires.

En cas de surchauffe, l'eau issue des capteurs solaires peut ainsi être détournée du circuit les conduisant vers la chambre de stratification, pour être recueillie dans la chambre de stockage, où elle peut refroidir.

Avantageusement, la chambre de stockage est équipée de moyens d'évacuation d'eau.

Ainsi, l'invention intègre une protection contre les effets de la surchauffe par fermeture mécanique de la boucle solaire et échappement à l'air libre du volume d'eau provoquant l'excès de pression.

Un système de protection configuré de cette façon constitue alors une sécurité lorsque le circulateur est à l'arrêt malgré les apports solaires.

Un tel système de protection contre les effets de la surchauffe est donc destiné à éviter la détérioration du circuit hydraulique sous l'effet d'une température d'eau élevée ou d'une détente instantanée de vapeur provenant des capteurs solaires en stagnation.

Il est placé en parallèle sur le circuit hydraulique côté retour des capteurs solaires thermiques de l'installation, ceci de préférence au plus éloigné des éléments les plus exposés aux températures chaudes. Ce système est donc destiné à être placé proche de la chambre de stratification.

Comme cela va être expliqué plus en détails par la suite, le but est d'éviter les retours de vapeur d'eau ou d'eau liquide à des températures excessives dans les installations hydrauliques.

Selon une solution préférentielle, les moyens d'évacuation d'eau comprennent une soupape de sécurité, configurée pour laisser échapper l'eau dont la pression dans la chambre de stockage dépasse 3,5 bars.

Avantageusement, les moyens de mise en circulation directe comprennent un circulateur, intégré au quatrième conduit de façon à diriger l'eau dans le sens allant de la chambre de stratification vers le(s) capteur(s) solaire(s), le circuit de protection comprenant une électrovanne pilotant l'ouverture et la fermeture du troisième conduit, le circulateur et l'électrovanne étant tous deux reliés à un organe de régulation mesurant la température de l'eau dans les capteurs solaires.

Ces moyens permettent, lorsque la température mesurée dépasse un seuil prédéfini, de couper automatiquement la circulation d'eau chaude entre les capteurs solaires et la chambre de stratification et de la dévier vers le circuit de protection contre les effets de la surchauffe.

Le système selon l'invention s'inscrit de cette façon clairement dans une approche visant à supprimer la conception classique « circuit primaire/circuit secondaire » (c'est l'eau chaude sanitaire distribuée qui circule dans l'ensemble du système) et à se prémunir des effets de la surchauffe.

Il permet en outre de s'affranchir du recours à un fluide caloporteur comprenant un additif anti-gel susceptible d'engendrer de nombreux inconvénients (rappelés précédemment).

Pour cela, le troisième conduit et le quatrième conduit peuvent être reliés par un circuit passant par le ou les capteurs solaires, incluant des moyens mécaniques anti-gel destinés à éviter la formation de glace.

Les moyens mécaniques anti-gel peuvent intégrer des moyens de vidange du circuit activés à une température susceptible d'engendrer un état solide de l'eau. Un système anti-gel configuré de cette façon constitue alors une sécurité « ultime » en mode de fonctionnement dégradé, c'est-à-dire lorsque le circulateur est hors service (ceci en raison d'une panne mécanique ou électrique).

Un tel système anti-gel permet d'éviter la détérioration du circuit hydraulique sous l'effet du gel. Il peut être placé en série sur le réseau hydraulique du côté des capteurs solaires thermiques de l'installation, ceci de préférence au plus proche des éléments les plus exposés aux températures froides. Ce système est donc destiné à être placé à l'extérieur, proche des capteurs, sur le quatrième conduit. Le but est de remplacer l'eau du circuit atteignant une température critique par de l'eau à température plus élevée, provenant du réseau d'eau potable, ceci sans perte de pression.

L'invention propose alors une solution de production d'eau chaude qui s'avère moins coûteuse, moins polluante et thermiquement plus performante que les systèmes de l'art antérieur.

L'invention a encore pour objet, indépendamment ou en combinaison avec ce qui précède, un circuit de protection contre les effets de la surchauffe dans un système de production d'eau chaude, par exemple tel que défini plus haut, mais non exclusivement, le circuit de protection comprenant :
- un conduit d'arrivée d'eau surchauffée provenant des capteurs solaires,
- une soupape s'ouvrant sous l'effet de la pression permettant l'ouverture du conduit d'arrivée d'eau surchauffée en cas de surpression,
- un conduit d'arrivée d'eau provenant du réseau d'eau,
- un élément thermostatique commandant l'ouverture d'une vanne d'ouverture du conduit d'arrivée d'eau provenant du réseau d'eau sous l'effet de la température,
- une chambre de mélange de vapeur d'eau provenant de l'eau surchauffée et d'eau provenant du réseau, reliant le conduit d'arrivée d'eau surchauffée et le conduit d'arrivée d'eau provenant du réseau d'eau.

Le circuit de protection contre les effets de la surchauffe comprend en outre avantageusement un conduit d'évacuation d'eau refroidie relié à la chambre de mélange, ce conduit d'évacuation pouvant être connecté par exemple aux égouts.

Dans un mode de réalisation particulier, une chambre de stockage peut être interposée entre le conduit d'évacuation et les égouts.

Le circuit de protection contre les effets de la surchauffe est intégré dans un système de production d'eau chaude, par exemple tel que décrit plus haut.

Le fonctionnement d'un tel circuit de protection peut être le suivant.

L'eau surchauffée provenant des capteurs arrive par le conduit d'arrivée d'eau provenant des capteurs solaires, à une pression supérieure à la pression atmosphérique, ce qui permet l'ouverture de la soupape et le passage de l'eau surchauffée dans la chambre de mélange. L'eau surchauffée, à la pression atmosphérique, devient vapeur, et sous l'effet de la température élevée, l'élément thermostatique actionne l'ouverture de la vanne et permet ainsi l'arrivée, dans la chambre de mélange, d'eau provenant du réseau qui se mélange alors à la vapeur d'eau et la refroidit pour la liquéfier. L'évacuation a lieu grâce au conduit d'évacuation, de telle sorte que l'eau refroidie s'écoule dans la chambre de stockage et/ou vers les égouts.

Grâce à ce circuit de protection, une grande quantité de vapeur d'eau peut être traitée. Un autre avantage de ce circuit de protection est qu'il permet d'éviter l'évacuation de vapeur d'eau dans une pièce.

Selon cet aspect de l'invention, l'invention a encore pour objet un système de production d'eau chaude comprenant un circuit de protection contre les effets de la surchauffe ainsi défini.

D'autres caractéristiques et avantages de l'invention apparaîtront plus clairement à la lecture de la description suivante d'un mode de réalisation préférentiel de l'invention, donné à titre d'exemple illustratif et non limitatif, et du dessin annexé sur lequel :
- la figure 1 est une représentation schématique d'un système de production d'eau chaude sanitaire incluant un circuit de protection contre les effets de la surchauffe, selon un mode de réalisation de l'invention,
- la figure 2 est une représentation schématique d'une variante de circuit de protection contre les effets de la surchauffe pouvant être intégré notamment dans un système de production d'eau chaude sanitaire de l'invention, et
- la figure 3 est une représentation schématique et partielle agrandie du circuit de protection de la figure 2.

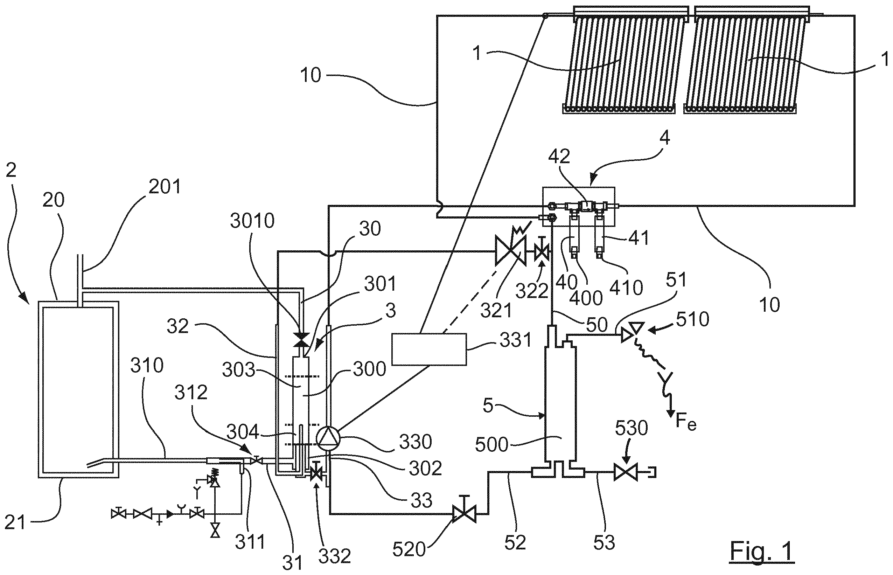

En référence à la figure 1, un système de production d'eau chaude sanitaire selon l'invention comprend :
- au moins un capteur solaire thermique à eau 1 (deux, en l'occurrence) constitué ici par des capteurs solaires à tube ;
- au moins un ballon 2 de stockage d'eau chaude sanitaire ;
- des moyens intermédiaires, décrits plus en détails par la suite, reliés d'une part aux capteurs solaires thermiques 1 et, d'autre part, au ballon 2 de stockage d'eau chaude sanitaire, ces moyens intermédiaires étant aptes à alimenter le ballon 2 en eau chaude par l'action des capteurs solaires thermiques.

Selon le principe de l'invention, les moyens intermédiaires comprennent :
- des moyens de mise en circulation directe de l'eau des capteurs solaires 1 dans le ballon d'eau chaude 2, et
- un circuit de protection contre les effets de la surchauffe.

Plus précisément, les moyens de mise en circulation directe comprennent une chambre de stratification 3 comprenant un conduit amont 32 alimenté par les capteurs solaires 1.

Un conduit 50 faisant partie du circuit de protection, comme nous le verrons par la suite, dérive du conduit amont 32, de telle sorte que l'eau provenant des capteurs peut être déviée vers ce conduit 50. Ainsi, le circuit de protection est alimenté par piquage à partir du conduit amont 32.

La chambre de stratification 3 délimite un volume 300 mettant en communication quatre conduits :
- un premier conduit 30, de départ d'eau vers le ballon 2 de stockage d'eau chaude sanitaire, débouchant dans une partie supérieure 301 de la chambre ;
- un deuxième conduit 31, d'arrivée d'eau, débouchant en partie inférieure 302 de la chambre ;
- un troisième conduit, d'arrivée d'eau en provenance des capteurs 1, constitué par le conduit amont 32, débouchant dans une zone intermédiaire d'arrivée 303 située entre la partie supérieure 301 et la partie inférieure 302 ;
- un quatrième conduit 33, de départ d'eau vers les capteurs solaires thermiques 1, débouchant dans une deuxième zone intermédiaire 304, située entre la partie inférieure 302 et la zone intermédiaire 303 d'arrivée d'eau en provenance des capteurs.

On note que, selon plusieurs variantes envisageables (non représentées), les départs et arrivées d'eau dans le ballon 3 de stratification, par les conduits 30, 31, 32, et 33, peuvent s'étendre longitudinalement ou latéralement par rapport à la chambre. La figure 1 illustre l'une de ces variantes, dans laquelle les conduits 30, 31 et 32 s'étendent longitudinalement, et le conduit 31 latéralement, par rapport à l'axe de la chambre.

Selon le principe de l'invention, on comprend que les différentes zones 301, 302, 303, 304 de la chambre communiquent entre elles pour constituer le volume global 300 indiqué précédemment.

On note que la chambre 3 est constituée par un corps allongé s'étendant verticalement, par exemple de forme cylindrique, dont la dimension en hauteur est prévue pour assurer un compromis entre l'éloignement nécessaire entre la partie supérieure et la partie inférieure de la chambre, et un temps réduit de stratification entre la partie supérieure et la partie inférieure de la chambre.

A titre indicatif, une telle chambre 3 de stratification présente une dimension en hauteur de 120mm à 600mm pour un diamètre de la chambre de 30 à 120mm en fonction de la puissance.

Une chambre 3 selon l'invention assure le transfert de chaleur entre la source chaude (capteurs solaires thermiques) et la source froide (ballon de stockage d'eau chaude sanitaire). La chambre 3 a donc pour fonction de séparer l'eau en trois niveaux de température de l'eau, à savoir :
- un niveau "basse température", entre les extrémités du deuxième conduit 31 et du quatrième conduit 33 débouchant dans la chambre ;
- un niveau de température de mélange, entre les extrémités du troisième conduit 32 et du quatrième conduit 33 débouchant à l'intérieur de la chambre ;
- un niveau "haute température", entre les extrémités du troisième conduit 32 et du premier conduit 30 débouchant à l'intérieur de la chambre.

Par ailleurs, tel que cela apparaît sur la figure 1, le premier conduit de départ d'eau vers le ballon d'eau chaude s'étend à partir d'une extrémité supérieure 301 de la chambre, jusqu'à un niveau à partir duquel il s'étend au-dessus de l'extrémité supérieure 20 du ballon 2, au niveau de laquelle il pénètre à l'intérieur du ballon. A partir de l'extrémité supérieure 20 du ballon 2, s'étend un conduit d'alimentation 201 en eau chaude du réseau du bâtiment desservi par le système selon l'invention.

On note que le deuxième conduit 31 communique avec le ballon 2, en pénétrant dans celui-ci par l'extrémité inférieure 21 du ballon, ceci par l'intermédiaire d'une portion 310 du deuxième conduit.

La partie inférieure 302 constitue une zone d'eau froide de la chambre 3, le conduit 31 amenant l'eau sanitaire à chauffer en provenance notamment du ballon 2.

De plus, un piquage 311 permet de relier le deuxième conduit 31 au réseau d'eau potable, de façon à apporter un complément en eau dans le système en cas de besoin.

La circulation de l'eau dans le conduit 33 en direction des capteurs solaires thermiques 1, puis à partir des capteurs solaires thermiques en direction de la chambre 3, est assurée par un circulateur 330 et l'ouverture d'une électrovanne 321, pilotés par une régulation 331. Le débit d'eau est réglé par une vanne 332.

La production d'eau chaude dans un système selon l'invention s'opère de la façon suivante.

Dans un premier temps, lors d'une phase de mise en service, le système est bien entendu mis en eau, ceci en remplissant l'ensemble du circuit allant et venant entre les capteurs solaires thermiques 1 et le ballon 2, y inclus le volume des capteurs et du ballon.

La circulation de l'eau dans le système est assurée, en fonctionnement, par le circulateur 330 et l'ouverture d'une électrovanne 321, pilotés par un organe de régulation 331.

Le volume d'eau mis en circulation à partir du quatrième conduit 33 partant de la chambre 3 en direction des capteurs solaires thermiques 1 correspond à un volume soit soutiré du ballon 2, par l'intermédiaire du conduit 310, soit procuré par une alimentation en eau potable du réseau par l'intermédiaire du conduit 311 connecté au deuxième conduit 31 d'arrivée d'eau dans la chambre.

L'eau suit alors un circuit 10 aller/retour par rapport à la chambre, ce circuit 10 comportant donc un aller entre la chambre et les capteurs solaires thermiques, puis un retour entre les capteurs solaires thermiques et la chambre.

En sortie des capteurs solaires thermiques, l'eau chauffée arrive dans la chambre par l'intermédiaire du troisième conduit 32.

L'eau chaude s'élève à l'intérieur de la chambre 3, tel que décrit précédemment.

La sortie de l'eau chauffée se fait en partie supérieure de la chambre 3, au niveau haute température, et part en direction du ballon 2, par l'intermédiaire du premier conduit 30. Un volume d'eau froide équivalent est alors aspiré dans la partie inférieure 302 de la chambre.

La mise en mouvement de l'eau entre la chambre 3 et le ballon 2 de stockage d'eau chaude sanitaire est générée par un phénomène physique de thermosiphon connu de l'homme du métier. En effet, la variation de la masse volumique de l'eau en fonction de la température dans la chambre crée une circulation naturelle de l'eau vers le ballon 2.

L'eau chauffée sort donc naturellement de la chambre 3, par l'intermédiaire du premier conduit 30, et est conduite jusqu'à la partie supérieure 20 du ballon 2 de stockage d'eau chaude sanitaire. Il s'établit alors une stratification immédiate de l'eau dans la partie supérieure du ballon 2.

Le débit de l'eau généré par le phénomène de thermosiphon est préférentiellement contrôlé à l'aide d'une vanne de réglage 312 placée à l'entrée « eau froide » de la chambre. En contrôlant ce débit, la température de stratification dans le ballon est également contrôlée.

Afin d'augmenter la température en sortie des capteurs solaires thermiques, le débit d'eau véhiculée par le circulateur est préférentiellement faible. Le diamètre des tuyauteries est alors sensiblement réduit.

On note que le système décrit ne comprend pas de vase d'expansion destiné à compenser la dilatation de l'eau. Il en résulte une montée en pression dans le circuit jusqu'à l'ouverture d'une soupape de sécurité 510 à sa pression de tarage, idéalement 3,5 bars. Cette soupape de sécurité est intégrée au circuit de protection, détaillé par la suite. L'excédent d'eau évacué lors de la montée en pression est compensé naturellement par des appoints d'eau froide lors de la réduction de température du circuit.

De plus, le système fonctionne aussi avec des ballons équipés de tubes plongeurs eau froide et eau chaude en partie inférieure.

Par ailleurs, pour optimiser la charge hydro-motrice et donc favoriser la mise en mouvement de l'eau :
- le bas de la chambre 3 est préférentiellement à un niveau inférieur ou égal au point d'entrée d'eau froide dans le ballon de stockage ;
- et le haut de la chambre 3 est préférentiellement à un niveau inférieur au point de puisage d'eau chaude dans le ballon de stockage.

Selon une variante envisageable, un moyen mécanique constitué d'une vanne thermostatique 3010 assure le passage ou non de l'eau dans le ballon. Cette vanne est placée sur le départ du conduit 30 et au point haut de la partie 301 de la chambre.

Cette vanne thermostatique 3010 permet d'optimiser la stratification dans le ballon 2, l'eau entre la chambre 3 et le ballon 2 étant mise en mouvement si et seulement si la température dans la partie 301 de la chambre est suffisante, idéalement 50°C.

La vanne thermostatique 3010 est normalement fermée pour une température inférieure à 50°C dans la partie 301 de la chambre. Elle est totalement ouverte pour une température supérieure à 60°C.

L'ouverture de la vanne thermostatique, entraîne l'amorçage du thermosiphon.

Les avantages sont les suivants :
- la stratification dans le ballon ne se réalise qu'à des niveaux de température élevés
- les trains d'eau froide dans la chambre, pouvant provenir par exemple d'un sous tirage sur l'installation de distribution d'eau chaude sanitaire, sont stoppés.

Le fonctionnement des moyens mécaniques de stratification est le suivant :
- sous l'effet d'une température d'eau dans la partie 301 de la chambre proche de 50°C, la vanne thermostatique 3010 commence à s'ouvrir ;
- le thermosiphon s'amorce ;
- l'eau chaude s'évacuant de la chambre est immédiatement remplacée par de l'eau froide provenant du ballon ;
- la vanne thermostatique est totalement ouverte sous l'effet d'une température d'eau dans la partie 301 de la chambre proche de 60°C ;
- si de l'eau dans la partie 301 de la chambre arrive à une température inférieure à 50°C alors la vanne thermostatique se ferme.

En référence à la figure 1, le circuit de protection contre les effets de la surchauffe selon l'invention comprend :
- l'électrovanne 321 "tout ou rien", normalement fermée, placée sur le conduit 32 ;
- une chambre 5 de stockage (vase tampon) et de refroidissement d'eau provenant des capteurs solaires 1 ;
- des moyens d'évacuation d'eau, équipant cette chambre et comprenant une soupape de sécurité 510 ;
- un conduit 50 d'eau raccordant directement la chambre de stockage au circuit 10 sur le retour des capteurs solaires 1 ;
- un conduit 51 d'eau raccordant la chambre de stockage à la soupape de sécurité 510 ;
- un conduit 52 d'arrivée d'eau raccordant la chambre de stockage au circuit 33 de départ vers les capteurs ;
- un conduit 53 de vidange ou remplissage en partie basse de la chambre ;
- une vanne d'isolement 520 placée sur le conduit 52 (normalement fermée) ;
- une vanne d'isolement 530 placée sur le conduit 53 (normalement fermée).

Ainsi, le circuit de protection relie le deuxième conduit 33 et le troisième conduit 32.

Tel qu'illustré sur la figure 1, la chambre 5 délimite un volume 500 mettant en communication les quatre conduits 50, 51, 52, 53 selon la configuration suivante :
- le conduit 50 raccordé au circuit 10 débouche dans une partie supérieure de la chambre 500, il plonge dans la partie inférieure de la chambre 500 ;
- le conduit 51 d'échappement d'eau débouche dans une partie inférieure de la chambre 500 ;
- le conduit 52 raccordé au circuit 311 débouche dans une partie inférieure de la chambre 500 ;
- le conduit 53 de vidange ou remplissage débouche dans une partie inférieure de la chambre 500.

On note que, tel que cela apparaît clairement sur la figure 1, la chambre 5 est constituée par un corps allongé s'étendant verticalement, par exemple de forme cylindrique, dont la dimension en hauteur est prévue pour assurer un volume tampon d'eau refroidie.

A titre indicatif, une telle chambre présente une dimension en hauteur de 120 à 600mm et en diamètre de 30 à 120mm.

Le fonctionnement de la protection contre les effets de la surchauffe est le suivant :
- lorsque la température d'eau dans les capteurs solaires 1 atteint une température proche de 95°C, ou bien en cas de coupure électrique, alors le circulateur 330 s'arrête et l'électrovanne 321 se ferme.
- l'eau n'est alors plus en mouvement et est contenue dans un circuit fermé entre les moyens mécaniques 520 et 42 et l'électrovanne 321, y inclus les capteurs solaires 1 et la chambre 500.
- dans ce cas, un apport de chaleur par le soleil, provoque la dilatation de l'eau. Il en résulte une montée en pression dans le circuit fermé jusqu'à l'ouverture de la soupape de sécurité 510 à sa pression de tarage.
- dans les capteurs solaires 1, l'eau se vaporise et la vapeur déplace l'eau liquide vers la chambre 500 où elle se refroidit puis vers la soupape de sécurité 510 par l'intermédiaire du conduit 51.
- depuis la source de chaleur au niveau des capteurs solaires 1, l'eau se refroidit suffisamment dans son parcours jusqu'à la soupape de sécurité 510 pour s'échapper sans risque pour les biens et les personnes.
- tant que la température dans les capteurs solaires 1 est supérieure à une valeur proche de 95°C, la régulation 331 maintient l'arrêt du circulateur 330 et la fermeture de l'électrovanne 321.

La pression dans le circuit fermé est limitée par la pression de tarage de la soupape de sécurité 510. Elle est supérieure à la pression d'alimentation d'eau potable tant que les apports solaires sont suffisants. Dès que les apports se réduisent, la vapeur d'eau se condense dans les capteurs. Il en résulte une chute de pression jusqu'à ce que l'eau provenant du conduit 32 assure par l'intermédiaire de l'électrovanne 321 (passante lorsque la pression en amont chute) un équilibre de la pression sur l'ensemble du circuit hydraulique interconnecté.

Selon une autre caractéristique du mode de réalisation illustré par la figure 1, le système inclut des moyens mécaniques anti-gel 4.

Ces moyens anti-gel 4 sont placés sur le circuit aller reliant la chambre 3 et les capteurs solaires thermiques 1 ou, en d'autres termes, sur la branche aller du circuit 10 reliant le quatrième conduit 33 et le troisième conduit 32 débouchant dans la chambre 3.

Comme indiqué précédemment, le système de production d'eau chaude sanitaire selon l'invention utilise un seul et unique réseau ; en d'autres termes, il n'y a pas de réseau primaire séparé d'un réseau secondaire comme c'est le cas dans les solutions traditionnelles. Outre le recours à un fluide caloporteur additionné d'un fluide anti-gel, la protection du réseau cheminant à l'extérieur est habituellement assurée par la mise en service périodique d'un circulateur en fonction de la température d'eau mesurée dans les capteurs solaires thermiques.

Selon le présent mode de réalisation de l'invention, le système anti-gel proposé est une sécurité ultime en mode de fonctionnement dégradé (circulateur hors service). Ce système est destiné à éviter la détérioration du circuit hydraulique sous l'effet du gel.

Les moyens mécaniques anti-gel, destinés à éviter la formation de glace dans le circuit 10, comprennent :
- deux purgeurs thermostatiques 400, 410, destinés à éviter la détérioration du circuit 10 et des équipements raccordés à celui-ci sous l'effet du gel ; ces purgeurs sont raccordés aux extrémités des découpleurs thermiques décrits ci-après, au point bas de ceux-ci ;
- un clapet anti-retour 42, destiné en cas d'ouverture d'un des purgeurs thermostatiques à assurer une vidange maîtrisée du circuit ; ce clapet anti-retour est installé en série sur le circuit hydraulique, entre les deux purgeurs ;
- deux découpleurs thermiques 40, 41 : en matériau de type téflon ou similaire, ayant une bonne tenue à la pression, à la température, aux rayons ultra-violets, ayant une conductivité thermique supérieure aux canalisations isolées du réseau à proximité ; ces découpleurs sont destinés à protéger les purgeurs thermostatiques d'une température excessive, et en cas de température basse, à solliciter prématurément les purgeurs thermostatiques ; ces découpleurs thermiques sont raccordés en dérivation sur le circuit hydraulique, et sont installés verticalement sous la tuyauterie.

Le clapet des purgeurs thermostatiques est normalement fermé pour une température supérieure à 1°C.

A l'ouverture du purgeur 410, du côté des capteurs solaires thermiques, on vidange partiellement les capteurs solaires thermiques. L'ouverture du purgeur 400, du côté du conduit provenant de la chambre, entraîne la vidange de la canalisation « aller », s'étendant entre la chambre et le purgeur 40.

Le fonctionnement des moyens mécaniques anti-gel est le suivant :
- sous l'effet d'une température d'eau dans le découpleur thermique proche du point de congélation, le purgeur thermostatique correspondant s'ouvre ;
- le purgeur alors ouvert vidange une partie de l'eau dans l'installation ;
- l'eau s'évacuant du circuit d'eau chaude sanitaire est immédiatement remplacée par de l'eau du réseau d'eau potable sans perte de pression ;
- l'eau à température plus élevée arrive dans le découpleur thermique ; les purgeurs thermostatiques se ferment.

Ce cycle se prolonge tant que l'eau dans le découpleur est proche du point de congélation.

Accessoirement, les vannes 322 et 520 sont manoeuvrées exceptionnellement pour :
- la purge du circuit lors de sa mise en eau initiale ;
- l'isolement de la boucle solaire en cas de maintenance ;
- le détartrage du/des capteurs solaires.

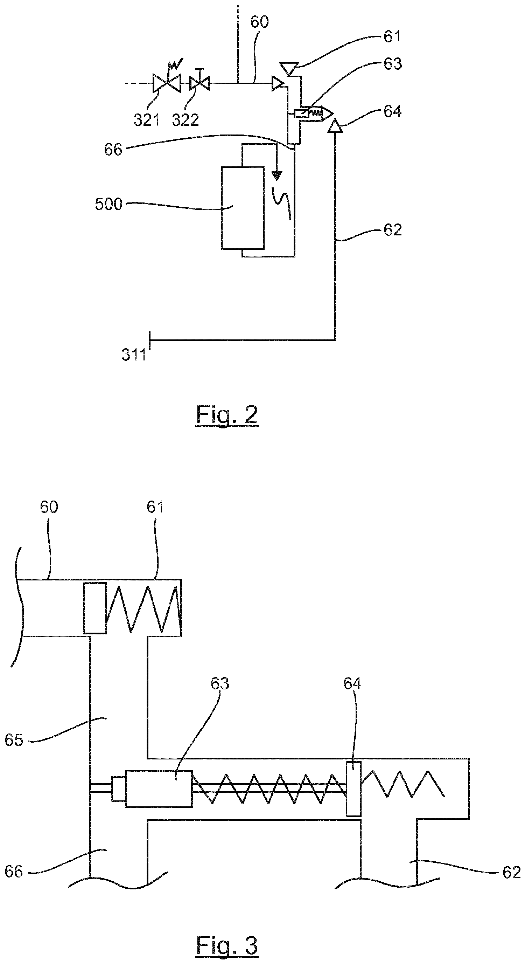

Le système illustré à la figure 1 n'est pas couvert par les revendications hormis sa variante selon laquelle il comprend un circuit de protection contre les effets de la surchauffe couvert par l'une quelconque des revendications 1 à 7 comme par exemple celui décrit en relation avec les figures 2 et 3.

On a représenté sur les figures 2 et 3 une variante de circuit de protection contre les effets de la surchauffe, notamment estivale.

Selon cet exemple, le circuit de protection contre les effets de la surchauffe peut être intégré dans le système de production d'eau chaude tel que défini plus haut ou dans un autre qui conviendrait.

Le circuit de protection comprend :
- un conduit d'arrivée 60 d'eau surchauffée provenant des capteurs solaires,
- une soupape 61 s'ouvrant sous l'effet de la pression permettant l'ouverture du conduit d'arrivée 60 d'eau surchauffée en cas de surpression,
- un conduit d'arrivée 62 d'eau provenant du réseau d'eau, avant passage dans les capteurs solaires,
- un élément thermostatique 63 commandant l'ouverture d'une vanne 64 d'ouverture du conduit d'arrivée d'eau 62 provenant du réseau d'eau sous l'effet de la température,
- une chambre de mélange 65 de vapeur d'eau provenant de l'eau surchauffée et d'eau provenant du réseau, reliant le conduit d'arrivée 60 d'eau surchauffée et le conduit d'arrivée d'eau 62 provenant du réseau d'eau.

Le circuit de protection contre les effets de la surchauffe comprend en outre un conduit d'évacuation 66 d'eau refroidie relié à la chambre de mélange 65, ce conduit d'évacuation 66 pouvant être connecté par exemple aux égouts.

Dans le mode de réalisation illustré sur la figure 2, une chambre de stockage 500 peut être interposée entre le conduit d'évacuation 66 et les égouts.

Le fonctionnement d'un tel circuit de protection illustré sur les figures 2 et 3 est le suivant.

L'eau surchauffée, par exemple à une température de 110°C provenant des capteurs solaires arrive par le conduit d'arrivée d'eau 60 provenant des capteurs solaires 1, à une pression supérieure à la pression atmosphérique, par exemple à 4,5 bars, ce qui permet l'ouverture de la soupape 61 et le passage de l'eau surchauffée dans la chambre de mélange 62. L'eau surchauffée, à la pression atmosphérique, devient vapeur, et sous l'effet de la température élevée, l'élément thermostatique 63 actionne l'ouverture de la vanne 64 et permet ainsi l'arrivée, dans la chambre de mélange 62, d'eau provenant du réseau qui se mélange alors à la vapeur d'eau et la refroidit pour la liquéfier. L'évacuation a lieu grâce au conduit d'évacuation 66, de telle sorte que l'eau refroidie s'écoule dans la chambre de stockage 500 et/ou vers les égouts.

## Revendications

1. Circuit de protection contre les effets de la surchauffe dans un système de production d'eau chaude destiné à être relié à un réseau d'eau, ledit système comprenant au moins un capteur solaire, ledit circuit de protection comprenant :
- un conduit d'arrivée (60) d'eau surchauffée provenant des capteurs solaires (1),
- une soupape (61) s'ouvrant sous l'effet de la pression permettant l'ouverture du conduit d'arrivée (60) d'eau surchauffée en cas de surpression,
- un conduit d'arrivée (62) d'eau provenant dudit réseau d'eau, avant passage dans les capteurs solaires (1),
- un élément thermostatique (63) commandant l'ouverture d'une vanne (64) d'ouverture du conduit d'arrivée d'eau (62) provenant du réseau d'eau sous l'effet de la température.
- une chambre de mélange (65) de vapeur d'eau provenant de l'eau surchauffée et d'eau provenant du réseau, reliant le conduit d'arrivée (60) d'eau surchauffée et le conduit d'arrivée d'eau (62) provenant du réseau d'eau.

2. Circuit de protection selon la revendication 1, comprenant un conduit d'évacuation (66) d'eau refroidie relié à la chambre de mélange (65).

3. Circuit de protection selon la revendication 2, ledit conduit d'évacuation (66) étant connecté aux égouts.

4. Circuit de protection selon la revendication 3, comprenant une chambre de stockage (500), ledit conduit d'évacuation (66) étant connecté aux égouts par l'intermédiaire de ladite chambre de stockage (500).

5. Circuit de protection selon l'une quelconque des revendications 1 à 4, dans lequel ladite soupape (61) est configurée pour s'ouvrir sous l'effet d'une pression supérieure à la pression atmosphérique.

6. Circuit de protection selon la revendication 5, dans lequel ladite soupape (61) est configurée pour s'ouvrir sous l'effet d'une pression supérieure à 4,5 bars.

7. Circuit de protection selon l'une quelconque des revendications 1 à 6, dans lequel ledit élément thermostatique (63) est configuré pour commander l'ouverture de ladite vanne (64) d'ouverture à une température égale à 110°C.

8. Système de production d'eau chaude destiné à être relié à un réseau d'eau, ledit système comprenant au moins un capteur solaire et un circuit de protection contre les effets de la surchauffe selon l'une quelconque des revendications 1 à 7.

9. Système de production d'eau chaude selon la revendication 8, comprenant au moins un ballon d'eau chaude et des moyens intermédiaires reliés d'une part audit ou auxdits capteurs solaires et, d'autre part, audit ballon d'eau chaude de façon à alimenter ledit ballon en eau chaude, les moyens intermédiaires comprennent des moyens de mise en circulation directe de l'eau des capteurs solaires dans le ballon d'eau chaude, les moyens de mise en circulation directe comprenant une chambre de stratification (3) comprenant un conduit amont (32) alimenté par l'un des capteurs solaires (1), ledit circuit de protection étant alimenté par piquage à partir du conduit amont (32).

10. Système de production d'eau chaude selon la revendication 9, ladite chambre de stratification (3) délimitant un volume (300) mettant en communication au moins quatre conduits :
- un premier conduit (30), de départ d'eau vers le ballon d'eau chaude (2), débouchant en partie supérieure (301) de ladite chambre ;
- un deuxième conduit (31), d'arrivée d'eau, débouchant en partie inférieure (302) de ladite chambre ;
- un troisième conduit, d'arrivée d'eau en provenance du ou des capteurs (1), constitué par ledit conduit amont (32), débouchant dans une zone intermédiaire d'arrivée (303) située entre la partie supérieure (301) et la partie inférieure (302) ;
- un quatrième conduit (33), de départ d'eau vers le ou les capteurs solaires, débouchant entre la partie inférieure (302) et la zone intermédiaire d'arrivée (303),

11. Système de production d'eau chaude selon la revendication 10, ledit circuit de protection reliant le troisième conduit (32) et le quatrième conduit (33).

12. Système de production d'eau chaude selon la revendication 10, dans lequel lesdits moyens de mise en circulation directe comprennent un circulateur (330), intégré au quatrième conduit (33) de façon à diriger l'eau dans le sens allant de la chambre de stratification (3) vers le(s) capteur(s) solaire(s) (1),
ledit circuit de protection comprenant une électrovanne (321) pilotant l'ouverture et la fermeture du troisième conduit (32), le circulateur et l'électrovanne étant tous deux reliés à un organe de régulation (331) mesurant la température de l'eau dans les capteurs solaires.

## Patentansprüche

1. Kreislauf zum Schutz gegen Überhitzungseffekte in einem Heißwasserbereitungssystem, der dazu bestimmt ist, mit einem Wassernetz verbunden zu werden, wobei das System mindestens einen Solarsensor umfasst, wobei der Schutz-Kreislauf umfasst:
- eine Zuleitung (60) von überhitztem Wasser, das von den Solarsensoren (1) kommt,
- ein Ventil (61), das sich unter der Wirkung des Drucks öffnet und die Öffnung der Zuleitung (60) von überhitztem Wasser im Falle von Überdruck ermöglicht,
- eine Zuleitung (62) von Wasser aus dem Wassernetz vor dem Einlauf in die Solarsensoren (1),
- ein thermostatisches Element (63), das die Öffnung eines Ventils (64) zum Öffnen der Zuleitung (62) von Wasser aus dem Wassernetz temperaturabhängig steuert,
- eine Mischkammer (65) von Wasserdampf, der von dem überhitzten Wasser kommt, und von Wasser aus dem Netz, die die Zuleitung (60) von überhitztem Wasser und die Zuleitung (62) von Wasser aus dem Wassernetz verbindet.

2. Schutz-Kreislauf nach Anspruch 1, umfassend eine Leitung (66) zum Abführen von gekühltem Wasser, die mit der Mischkammer (65) verbunden ist.

3. Schutz-Kreislauf nach Anspruch 2, wobei die Leitung (66) zum Abführen an das Kanalisationssystem angeschlossen ist.

4. Schutz-Kreislauf nach Anspruch 3, umfassend eine Speicherkammer (500), wobei die Leitung (66) zum Abführen über die Speicherkammer (500) an das Kanalisationssystem angeschlossen ist.

5. Schutz-Kreislauf nach einem der Ansprüche 1 bis 4, bei dem das Ventil (61) dazu vorgesehen ist, sich unter der Wirkung eines atmosphärischer Druck oberhalb des Umgebungsdrucks zu öffnen.

6. Schutz-Kreislauf nach Anspruch 5, bei dem das Ventil (61) dazu vorgesehen ist, sich unter der Wirkung eines Drucks über 4,5 bar zu öffnen.

7. Schutz-Kreislauf nach einem der Ansprüche 1 bis 6, bei dem das thermostatische Element (63) dazu vorgesehen ist, das Öffnen des Ventils (64) zum Öffnen bei einer Temperatur von 110°C zu steuern.

8. Heißwasserbereitungssystem, das dazu bestimmt ist, mit einem Wassernetz verbunden zu werden, wobei das System mindestens einen Solarsensor und einen Kreislauf zum Schutz gegen Überhitzungseffekte nach einem der Ansprüche 1 bis 7 umfasst.

9. Heißwasserbereitungssystem nach Anspruch 8, umfassend mindestens einen Heißwasserballon und Zwischenmittel, die einerseits mit dem oder den Solarsensoren und andererseits mit dem Heißwasserballon verbunden sind, um den Ballon mit Heißwasser zu versorgen, wobei die Zwischenmittel Mittel umfassen, um das Wasser von den Solarsensoren in dem Heißwasserballon direkt in Umlauf zu versetzen, wobei die Mittel zum direkten Versetzen in Umlauf eine Schichtungskammer (3) umfassen, umfassend eine stromaufwärtige Leitung (32), die von einem der Solarsensoren (1) versorgt wird, wobei der Schutz-Kreislauf durch Anstechen von der stromaufwärtigen Leitung (32) versorgt wird.

10. Heißwasserbereitungssystem nach Anspruch 9, wobei die Schichtungskammer (3) ein Volumen (300) einschließt, das mindestens vier Leitungen miteinander in Verbindung bringt:
- eine erste Wasserausgangsleitung (30) zum Heißwasserballon (2), die im oberen Teil (301) der Schichtungskammer mündet;
- eine zweite Wasserankunftsleitung (31), die im unteren Teil (302) der Schichtungskammer mündet;
- eine dritte Wasserankunftsleitung von dem oder den Solarsensoren (1), die von der stromaufwärtigen Leitung (32) gebildet ist, die in einer Zwischenankunftszone (303) mündet, die sich zwischen dem oberen Teil (301) und dem unteren Teil (302) befindet;
- eine vierte Wasserausgangsleitung (33) zu dem oder den Solarsensoren, die zwischen dem unteren Teil (302) und der Zwischenankunftszone (303) mündet.

11. Heißwasserbereitungssystem nach Anspruch 10, wobei der Kreislauf zur Schutz die dritte Leitung (32) und die vierte Leitung (33) verbindet.

12. Heißwasserbereitungssystem nach Anspruch 10, bei dem die Mittel zum direkten Versetzen in Umlauf eine Umlaufpumpe (330) umfassen, die in die vierte Leitung (33) integriert ist, um das Wasser in die Richtung von der Schichtungskammer (3) zu dem(n) Solarsensor(en) (1) zu lenken,
wobei der Schutz-Kreislauf ein Magnetventil (321) umfasst, das das Öffnen und Schließen der dritten Leitung (32) steuert, wobei die Umlaufpumpe und das Magnetventil beide mit einem Regelelement (331) verbunden sind, das die Temperatur des Wassers in den Solarsensoren misst.

## Claims

1. Circuit for protection against the effects of overheating in a hot-water production system intended to be linked to a water network, the said system comprising at least one solar collector, the said protection circuit comprising:
- an inlet pipe (60) for overheated water from the solar collectors (1),
- a valve (61) which opens under pressure, allowing the inlet pipe (60) for overheated water to open in the event of overpressure,
- an inlet pipe (62) for water from the said water network, before it enters the solar collectors (1),
- a thermostatic element (63) which activates, under the effect of temperature, the opening of a gate (64) for opening the inlet pipe (62) for water from the water network,
- a chamber (65) for mixing water vapour from the overheated water and water from the network, linking the inlet pipe (60) for overheated water and the inlet pipe (62) for water from the water network.

2. Protection circuit according to Claim 1, comprising a cooled-water discharge pipe (66) linked to the mixing chamber (65).

3. Protection circuit according to Claim 2, the said discharge pipe (66) being connected to the sewers.

4. Protection circuit according to Claim 3, comprising a storage chamber (500), the said discharge pipe (66) being connected to the sewers by means of the said storage chamber (500).

5. Protection circuit according to any one of Claims 1 to 4, in which the said valve (61) is configured to open under a pressure greater than atmospheric pressure.

6. Protection circuit according to Claim 5, in which the said valve (61) is configured to open under a pressure greater than 4.5 bars.

7. Protection circuit according to any one of Claims 1 to 6, in which the said thermostatic element (63) is configured to activate the opening of the said opening gate (64) at a temperature of 110ºC.

8. Hot-water production system intended to be linked to a water network, the said system comprising at least one solar collector and a circuit for protection against the effects of overheating according to any one of Claims 1 to 7.

9. Hot-water production system according to Claim 8, comprising at least one hot water cylinder and intermediate means linked, on the one hand, to the said solar collector(s) and, on the other hand, to the said hot water cylinder in such a way as to supply the said cylinder with hot water, the intermediate means comprising means for directly circulating water from the solar collectors to the hot water cylinder, the means for directly circulating water comprising a stratification chamber (3) comprising an upstream pipe (32) supplied by one of the solar collectors (1), the said protection circuit being supplied by tapping from the upstream pipe (32).

10. Hot-water production system according to Claim 9, the said stratification chamber (3) delimiting a volume (300) connecting at least four pipes:
- a first pipe (30), for the exit of water towards the hot water cylinder (2), leading into the upper part (301) of the said chamber;
- a second pipe (31), for the entry of water, leading into the lower part (302) of the said chamber;
- a third pipe, for the entry of water from the collector(s) (1), formed by the said upstream pipe (32), leading into an intermediate entry zone (303) located between the upper part (301) and the lower part (302);
- a fourth pipe (33), for the exit of water towards the solar collector(s), leading between the lower part (302) and the intermediate entry zone (303).

11. Hot-water production system according to Claim 10, the said protection circuit linking the third pipe (32) and the fourth pipe (33).

12. Hot-water production system according to Claim 10, in which the said means for directly circulating water comprise a circulator (330) integrated into the fourth pipe (33) in such a way as to direct the water from the stratification chamber (3) towards the solar collector(s) (1),
the said protection circuit comprising a for directly circulating water (321) controlling the opening and closing of the third pipe (32), the circulator and the for directly circulating water both being linked to a regulating element (331) which measures the temperature of the water in the solar collectors.
